Europäisches Patentamt

European Patent Office

Office européen des brevets

(19)

(11) **EP 0 979 387 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(21) Anmeldenummer: **99906064.3**

(22) Anmeldetag: **21.01.1999**

(51) Int Cl.⁷: **G01C 21/20**, G01C 25/00

(86) Internationale Anmeldenummer:
**PCT/DE1999/000153**

(87) Internationale Veröffentlichungsnummer:
**WO 1999/039161 (05.08.1999 Gazette 1999/31)**

(54) **NAVIGATIONSGERÄT UND VERFAHREN ZUR POSITIONSBESTIMMUNG MITTELS KOPPELNAVIGATION**

NAVIGATION DEVICE AND METHOD FOR POSITION DETERMINATION BY MEANS OF COUPLED NAVIGATION

APPAREIL DE NAVIGATION ET PROCEDE DE DETERMINATION DE POSITION PAR NAVIGATION COUPLEE

(84) Benannte Vertragsstaaten:
**DE FR GB IT**

(30) Priorität: **30.01.1998 DE 19803662**

(43) Veröffentlichungstag der Anmeldung:
**16.02.2000 Patentblatt 2000/07**

(73) Patentinhaber: **SIEMENS AKTIENGESELLSCHAFT**
**80333 München (DE)**

(72) Erfinder: **SCHUPFNER, Markus**
**D-93047 Regensburg (DE)**

(56) Entgegenhaltungen:
**EP-A- 0 261 404**     **US-A- 5 159 556**
**US-A- 5 311 195**

**Beschreibung**

Die Erfindung betrifft ein Navigationsgerät und ein Verfahren zur Positionsbestimmung mittels Koppelnavigation, insbesondere für Kraftfahrzeuge, bei dem Messwerte für zurückgelegte Entfernungen und Richtungen addiert werden. Eine so gefundene errechnete Position wird mit einer wahrscheinlichen Position auf einer digitalisierten Straßenkarte verglichen und korrigiert (Map Matching).

Aus der EP-0261404-A1 ist eine Navigationseinrichtung bekannt, die durch Koppelnavigation Positionswerte liefert, welche mit einer Straßenkarte überprüft werden. Nicht überwiegend auf einer Straße liegende Positionswerte werden solange um einen Verschiebewert korrigiert, bis sie überwiegend auf einer Straße liegen.

Die US-5311195-B offenbart ein Navigationssystem, welches ein relatives und ein absolutes Positionsbestimmungssystem enthält, wobei die relative Position mittels Koppelnavigation und Map-Matching bestimmt wird. Die relative Position wird in Abhängigkeit von der absoluten Position aktualisiert.

Die US-5159556-B beschreibt ein Fahrzeug-Navigationssystem, welches die aktuelle Fahrzeugposition in Echtzeit anzeigen kann. Dafür wird ein Abgleich zwischen einer aus Messwerten geschätzten und einer aus einer kartographisierten Route entnommenen Position ermittelt, wobei insbesondere die gemessene Richtung des Fahrzeugs und die Richtung der Route in Übereinstimmung gebracht werden.

Die Offenlegungsschrift DE 35 19 277 A1 offenbart ein Navigationsverfahren für Fahrzeuge, das auf Koppelnavigation (Dead Reckoning) beruht. Beim Erreichen eines Endziels kann der Benutzer die Abweichung zwischen der errechneten Position und dem tatsächlichen Standort durch Betätigen einer Taste ermitteln. Hieraus werden Korrekturwerte für die Messung der Richtung und die Messung der Weglänge ermittelt. Mit diesen Korrekturwerten können dauerhafte, konstante Fehler jeweils für die Richtungsmessung und die Entfernungsmessung korrigiert werden.

Aus der internationalen Patentanmeldung WO 93/09509 ist ein Sensorsystem für Fahrzeugnavigation bekannt, bei dem eine Fehlerkomponente eines Sensors festgestellt wird, um den Sensor zu rekalibrieren.

Das US-Patent 5,394,333 beschreibt ein Fahrzeugnavigationssystem mit GPS und Koppelnavigation. Eine durch Koppelnavigation errechnete Position wird auf eine Straßenkarte gezogen. Aus dem Unterschied zwischen der Position der Straßenkarte und einer mittels GPS gefundenen Position wird ein Korrekturwert für die GPS-Navigation bestimmt.

Aus der Offenlegungsschrift DE 42 11 933 A1 ist ein Navigationsgerät für Koppelnavigation bekannt, das Korrekturwerte für einen GPS-Empfänger bildet. Ein Korrekturwert wird aus dem Vergleich zwischen einer durch Koppelnavigation ermittelten Position und einer aus einem Massenspeicher ausgelesenen Straßenpositions-Koordinate ermittelt. Dieser Korrekturwert wird dem GPS-Empfänger zugeführt, um die aus dem Satellitenempfang gewonnen Positions-Daten zu berichten. Digitalisierungsfehler der in dem Massenspeicher gespeicherten Straßen gehen ungefiltert in den Korrekturwert ein.

Aus der Offenlegungsschrift DE 35 19 277 ist ein Navigationsverfahren für Fahrzeuge mit einer Koppelnavigationseinrichtung bekannt, bei dem ein Korrekturwert gebildet wird, indem beim Erreichen eines Fahrziels die Abweichung zwischen dem eingegebenen Fahrziel und dem über die Koppelnavigation ermittelten Standort bestimmt wird.

Es ist ein Ziel der Erfindung, ein Navigationsgerät und ein Verfahren bereitzustellen, die eine exakte Positionsbestimmung mittels Koppelnavigation selbst dann gestatten, wenn ein sich verändernder Fehler zwischen den berechneten Positionen und den wahrscheinlichen Positionen auftritt.

Dieses Ziel wird mit einem Navigationsgerät und einem Verfahren zur Positionsbestimmung mittels Koppelnavigation erreicht, wie sie in den unabhängigen Patentansprüchen definiert sind. Vorteilhafte Weiterbildungen sind in den Unteransprüchen angegeben.

Erfindungsgemäß wird der Fehler zwischen einer mittels Koppelnavigation errechneten Position (Sensorposition) und einer hiermit korrespondierenden wahrscheinlichen Position auf einer Straßenkarte gespeichert. Aus einer Folge von Fehlern oder Abweichungen ergibt sich ein bestimmtes Fehlerbild, das zur Korrektur der mittels Koppelnavigation errechneten Position eingesetzt wird. Das Fehlerbild wird nicht dazu verwendet, um eine Korrektur auf der Ebene eines Richtungssensors oder Entfernungssensors herbeizuführen und einen Korrekturwert für den gemessenen Winkel bzw. die gemessene Entfernung bereitzustellen. Erfindungsgemäß erfolgt eine Korrektur auf der Ebene des Prozessors und nicht auf der Ebene der Sensoren.

Dabei muß die zur Bildung des Korrekturwerts eingesetzte, korrespondierende Position der digitalisierten Straßenkarte nicht eine durch map matching bereits als sicher bewertete Position sein. Es kann auch eine lediglich auf der digitalisierten Straßenkarte verfolgte (tracking) Position verwendet werden, bei der die Sicherheit, daß es sich um die tatsächliche Position handelt, noch nicht so groß ist, daß sie für die Koppelnavigation übernommen wird.

Bei der gleichzeitigen Verfolgung von mehreren Pfaden auf der digitalisierten Straßenkarte, auf denen sich möglicherweise die momentane Positionen des Navigationsgeräts oder eines hiermit ausgerüsteten Fahrzeugs befindet, können mehrere (mögliche) Positionen der digitalisierten Straßenkarte mit der durch Koppelnavigation ermittelten Position korrespondieren. Zur Bestimmung der Abweichung gegenüber der durch Koppelnavigation berechneten Position eignet sich am besten diejenige der möglichen Positionen, die auf demjenigen Pfad liegt, für den die größte Sicherheit gilt, daß der momentane Standort darauf liegt. Zur Bestimmung der Sicherheit können beispielsweise Kriterien wie die Übereinstimmung mit einem zuvor sicher benutzten Pfad, der Grad an Übereinstimmung bezüglich der von einem Sensor gemessenen Richtung mit der Richtung des digitalisierten Pfads oder die Nähe zur gemessenen Position verwendet werden. Alternativ können für eine gemessene (Sensor-) Position mehrere Abweichungen gegenüber den jeweiligen möglichen korrespondierenden Positionen auf unterschiedlichen Pfaden bestimmt und gespeichert werden.

Aufgrund der kontinuierlichen Rückkopplung der Abweichung zwischen errechneter und wahrscheinlicher Position auf die errechnete Position erfolgt eine zuverlässige Positionsbestimmung selbst dann, wenn sich das Fehlerbild verändert. Dies ist z.B. im Falle einer Richtungsmessung mit einem Gyroskop der Fall, dessen Fehler von der Betriebstemperatur abhängig ist.

Gemäß einer bevorzugten Ausführungsform findet eine sprunghafte Änderung im Fehlerbild keinen Niederschlag auf den Korrekturwert. Dies läßt sich beispielsweise dadurch bewerkstelligen, daß eine Grenze für die Differenz einer neu zu speichernden Abweichung im Verhältnis zu den schon gespeicherten Abweichungen definiert wird. Auf diese Weise findet eine erkannte Abweichung, die auf einem Fehler bei der Digitalisierung der Straßenkarte beruht, keinen Eingang auf den Korrekturwert. Ein ähnlicher Fehler kann auch bei Kurvenfahrten auf breiten Fahrbahnen in Abhängigkeit von der gewählten Fahrspur auftreten oder falls ein mit dem Navigationsgerät ausgerüsteter Personenkraftwagen schräg an einer Kreuzung steht und daher seine Ausrichtung nicht mit dem Straßenverlauf gemäß der digitalisierten Straßenkarte übereinstimmt.

Ein geeignetes Maß zur Bildung eines Korrekturwerts ist die Standardabweichung der vorhergehenden Folge von gespeicherten Abweichungen.

Vorzugsweise werden mit aufeinanderfolgenden, zu speichernden Abweichungen solange Zeitfenster oder Fehlerfenster gebildet, bis eine neu zu speichernde Abweichung eine definierte Grenze überschreitet. Anschließend wird versucht ein neues Zeitoder Fehlerfenster zur Bestimmung eines neuen Korrekturwerts zu bilden.

Das erfindungsgemäße Navigationsgerät und das erfindungsgemäße Verfahren sind auch in Verbindung mit einer GPS-Ortung (Global Positioning System) einsetzbar.

Weitere Vorteile, Merkmale und Anwendungsmöglichkeiten ergeben sich aus der Beschreibung eines Ausführungsbeispiels in Verbindung mit den Zeichnungen. Es zeigen:

Figur 1    ein erfindungsgemäßes Navigationssystem, und

Figur 2    die Bestimmung von "Fehlerfenstern".

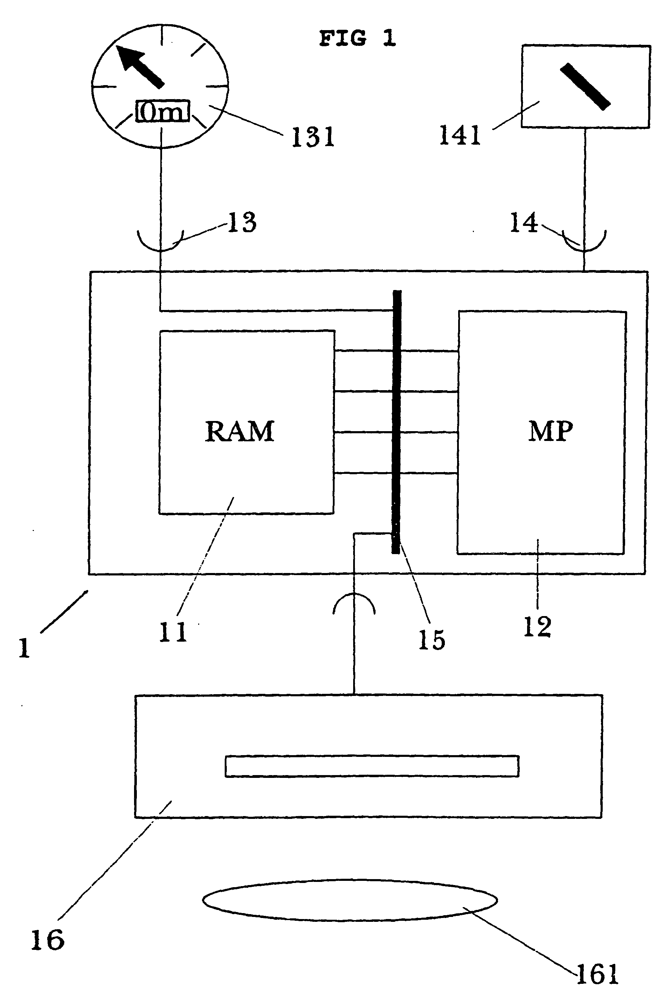

In Figur 1 weist ein Navigationsgerät 1 ein RAM 11 oder einen flüchtigen Speicher, einen Mikroprozessor 12, einen Eingang 13 für ein Tachometersignal oder einen Odometer 131 sowie einen Eingang 14 für ein Gyroskop 141 als Richtungsmesser auf. Der Eingang 14 und das Gyroskop 141 können auch im Gehäuse des Navigationsgeräts 1 angeordnet sein.

Das RAM 11, die Eingänge 13, 14 und ein Massespeicher, der als Laufwerk 16 für eine CD-ROM 161 oder eine DVD (Digital Versatile Disk) ausgebildet ist, sind mit dem Mikroprozessor 12 über einen Systembus 15 verbunden.

Über den Eingang 13 erhält der Mikroprozessor 12 ein Entfernungssignals des Odometers 131 und über den Eingang 14 ein Richtungssignal des Gyroskops 141. Die Signale werden in kurzen Abständen gemessen. Die jeweils gemessenen Entfernungen und Richtungen stehen für Vektoren, die zwecks Positionsbestimmung addiert werden. Nach einer Addition oder nach einer Vielzahl von Additionen erfolgt ein Vergleich der errechneten Position mit einer wahrscheinlichen Position auf einer digitalisierten Straßenkarte, die auf der Disk 161 gespeichert ist.

Hierzu wird die seit dem letzten Vergleich oder seit dem Start berechnete zurückgelegte Entfernung mit der gemäß der digitalisierten Straßenkarte zurückgelegten Entfernung verglichen. Zusätzlich wird die errechnete Ausrichtung des Fahrzeugs mit der Ausrichtung der betreffenden Straße auf der digitalisierten Straßenkarte verglichen. Die Differenzen werden jeweils durch die Anzahl der seit dem Vergleich erfolgten Additionen von Entfernungen bzw. Richtungen dividiert. Das Ergebnis dieser Division wird im folgenden als Abweichung bezeichnet.

In der Regel findet nicht für jede errechnete Position ein Vergleich mit der digitalisierten Straßenkarte statt. Sobald auf einer Fahrt zwei Vergleiche zwischen einer errechneten Position und der digitalisierten Straßenkarte stattgefunden haben, wird aus den im Speicher 11 abgelegten Abweichungen jeweils getrennt für die Entfernungsabweichung und die Richtungsabweichung, die Standardabweichung $S = \sqrt{e_1{}^2 + e_2{}^2}$ errechnet, wobei $e_1$ und $e_2$ die ersten beiden ermittelten Abweichungen sind. Im Laufe einer Fahrt können noch eine große Zahl Abweichungen $e_3$ bis $e_n$ zusätzlich zur Ermittlung der Standardabweichung herangezogen werden.

Die gemäß der digitalisierten Karte zurückgelegte Wegstrecke oder Entfernung seit dem letzten Vergleich läßt sich vereinfacht mit Hilfe der kartesischen Koordinaten feststellen. Die Wegstrecke

$$d = \sqrt{[y(t_2) - y(t_1)]^2 + [x(t_2) - x(t_1)]^2} \; ;$$

der entsprechende Winkel

$$\varphi = \tan\left\{\left[y(t_2) - y(t_1)\right] \div \left[x(t_2) - x(t_1)\right]\right\},$$

wobei $x(t_1)$ und $y(t_1)$ die Koordinaten sind, die bei dem vorhergehenden Vergleich mit der errechneten Position als die wahrscheinlich richtige Position der digitalisierten Straßenkarte und $x(t_2)$ und $y(t_2)$ die Koordinaten sind, die bei dem neuen Vergleich als die wahrscheinliche Position auf der digitalisierten Straßenkarte angenommen worden sind.

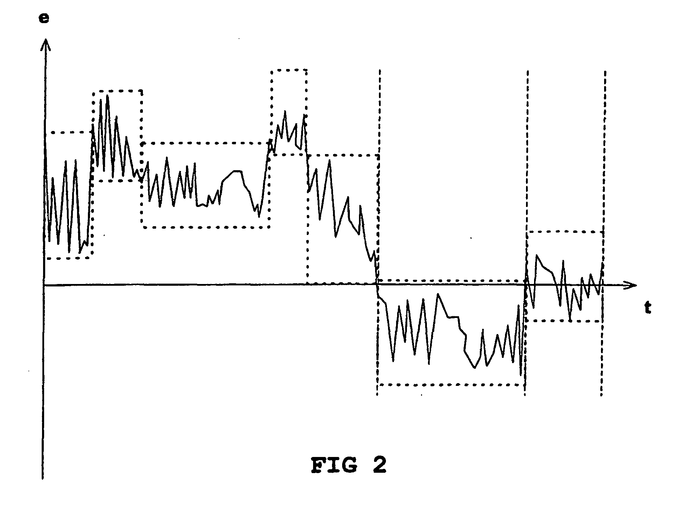

Figur 2 zeigt den zeitlichen Verlauf der Abweichungen e bezüglich der Entfernung von der entsprechenden wahrscheinlichen Position der digitalisierten Straßenkarte. Nach dem die ersten beiden Abweichungen festgestellt worden sind, wird ein Durchschnittswert durch Addition der beiden Abweichungen und Division durch zwei ermittelt. Zusätzlich wird die Standardabweichung ermittelt. Eine obere und eine untere Grenze für das Fortführen einer Folge von Abweichungen wird gebildet, indem die Differenz zwischen der Standardabweichung und dem Durchschnittswert errechnet wird. Der Durchschnittswert plus diese Differenz bildet die obere Grenze, der Durchschnittswert abzüglich der Standardabweichung bildet die untere Grenze.

Der Durchschnittswert der Entfernungsabweichungen wird zur Korrektur der nächsten mittels Koppelnavigation errechneten Position oder einer Vielzahl von errechneten Positionen verwendet bis der nächste Vergleich zwischen einer errechneten Position und einer wahrscheinlichen Position auf der digitalisierten Straßenkarte stattfindet.
Wenn die neuerlich gemessene Abweichung innerhalb der mittels der Standardabweichung festgelegten Grenzen ist, so wird die neuerliche Abweichung zu den vorangegangenen Abweichungen gespeichert, es werden ein neuer Mittelwert der gespeicherten Abweichungen, eine neue Standardabweichung und eine neue untere und obere Grenze auf der Basis des neuen Durchschnittswerts und der neuen Standardabweichung berechnet. Im letzten Rahmen oder Fenster sind die fortlaufenden Durchschnittswerte als gestrichelte Linie dargestellt.

Bei einem über eine gewisse Zeit gleichförmigen Fehlerverlauf wird aufgrund der Rückkoppelung des ermittelten Fehlers auf die errechnete Position die Genauigkeit der Koppelnavigation Schritt für Schritt erhöht.

Liegt eine neu ermittelte Abweichung außerhalb der festgelegten Grenzen, so wird die bisherige Folge von Abweichungen aus dem Speicher 11 gelöscht und in der oben beschriebenen eine neue Folge von Abweichungen begonnen.

Das Verfahren läßt sich durch weitere Kriterien zusätzlich verfeinern. So ist es günstig, die Reihe der gespeicherten Abweichungen trotz des Umstands weiterzuführen, daß eine neue Abweichung außerhalb der definierten Grenzwerte ist, wenn die darauf folgende Abweichung wieder innerhalb der Grenzen ist. Die aus dem durch die Grenzwerte definierten Rahmen oder Fenster fallende Abweichung muß nicht gespeichert werden.

Wenn die beiden letzten Abweichungen außerhalb der gesetzten Grenzen waren, so werden die vorhergehenden Abweichungen aus dem Speicher gelöscht und die beiden neuen Abweichungen dienen zur Berechnung einer neuen Standardabweichung, neuer Grenzwerte und eines neuen Durchschnitts, der für die Fehlerkorrektur eingesetzt wird.

Wenn eine neue festgestellte Abweichung innerhalb der definierten Grenzen ist, so empfiehlt sich dennoch das Löschen der bisherigen Folge von Abweichungen aus dem Speicher und die Bildung einer neuen Folge von Abweichungen, wenn die neue Abweichung und die vorhergehende Abweichung in der Nähe der entgegengesetzten Grenzen sind. Dies ist beispielsweise der Fall, wenn die eine Abweichung näher als 20% an die obere Grenze und die andere Abweichung näher als 20% an die untere Grenze heranreicht, gemessen an der Differenz zwischen Ober- und Untergrenze.

Die oben ausgeführten Schritte finden nicht nur Anwendung auf den Entfernungsfehler, sondern in entsprechender Weise auf den Richtungsfehler.

Das beschriebene System lernt aus den vorangegangenen Fehlern. Im Gegensatz zur Bildung von starren Grenzwerten die zur Bestimmung der Weiterführung oder dem Abbruch einer Folge von Abweichungen dienen, hat die Verwendung der beschriebenen dynamischen Grenzwerte den Vorteil, daß zwischen einem Rauschen und einer einschätzbaren Fehlerfunktionalität unterschieden wird. Das beschriebene System kann sich sogar auf ein veränderliches Fehlerbild anpassen.

**Patentansprüche**

1. Navigationsgerät für Koppelnavigation, das aufweist:

   - wenigstens einen Eingang (13) für einen Sensor (13) zur Bestimmung einer Entfernung,
   - wenigstens einen Eingang (14) für einen Sensor (141) zur Bestimmung einer Richtung,
   - wenigstens einen Prozessor (12) zur Positionsberechnung aufgrund von Meßwerten der Sensoren (13, 14),
   - eine in einem Speicher (16) gespeicherte digitale Straßenkarte, mit der eine errechnete Position verglichen wird,

   **dadurch gekennzeichnet, daß**

   - in einem Speicher (11) eine Folge von Abweichungen zwischen jeweils einer errechneten Position und einer korrespondierenden Position der digitalisierten Straßenkarte speicherbar ist,

- die errechnete Position mit einem auf der Grundlage von gespeicherten Abweichungen gebildeten Korrekturwert korrigierbar ist, und

- eine Folge von Abweichungen solange zur Bildung eines Korrekturwerts in dem Speicher (11) speicherbar ist, bis eine neu zu speichernde Abweichung außerhalb einer definierten Grenze ist.

**2.** Navigationsgerät nach Anspruch 1, **dadurch gekennzeichnet, daß** eine neue Folge von Abweichungen zur Bildung eines Korrekturwerts speicherbar ist, wenn die Folge der Abweichungen keine größere Differenz untereinander aufweist als die Standardabweichung der aktuellen Folge oder einen vordefinierten Betrag.

**3.** Navigationsgerät nach einem der vorhergehenden Ansprüche, **dadurch gekennzeichnet, daß** die speicherbare Abweichung derjenige Wert ist, der aus der Differenzbildung zwischen der errechneten Position und der korrespondierenden Position auf der digitalen Straßenkarte gebildet und durch die Anzahl der seit der vorhergehenden Differenzbildung addierten Entfernungen und/oder Richtungen dividiert ist.

**4.** Verfahren zur Positionsbestimmung mittels Koppelnavigation in einem Navigationsgerät mit wenigstens einem Eingang (13) für einen Sensor (131) zur Bestimmung einer Entfernung, wenigstens einem Eingang (14) für einen Sensor (141) zur Bestimmung einer Richtung, wenigstens einem Prozessor (12) und einem Speicher (16), in dem eine digitalisierte Straßenkarte gespeichert ist, wobei von dem Prozessor (12) Positionen aufgrund von Messwerten der Sensoren (13, 14) berechnet werden, **gekennzeichnet durch** die Schritte:

- eine Differenz zwischen einer errechneten Position und einer hiermit korrespondierenden, wahrscheinlichen Position auf einer digitalisierten Straßenkarte wird gebildet und als eine Abweichung von der wahrscheinlichen Position gespeichert,

- auf der Grundlage zeitlich aufeinander folgender Abweichungen wird ein Korrekturwert ermittelt, wobei eine Folge von Abweichungen solange zur Bildung eines Korrekturwerts gespeichert wird, bis eine neu zu speichernde Abweichung außerhalb einer definierten Grenze ist,

- der Korrekturwert wird jeweils zu einer nachfolgend errechneten Position addiert.

**5.** Verfahren nach dem vorhergehenden Anspruch, **dadurch gekennzeichnet, daß** der Korrekturwert auf der Basis des Durchschnitts der Abweichungen gebildet wird.

**6.** Verfahren nach dem vorhergehenden Anspruch, **dadurch gekennzeichnet, daß** zeitlich aufeinanderfolgende Abweichungen solange zur Bildung eines Korrekturwerts herangezogen werden, bis die Differenz zwischen einer mit dem Korrekturwert errechneten Position und der hiermit korrespondierenden wahrscheinlichen Position auf der digitalisierten Straßenkarte größer als die vorher bestimmte Abweichung ist oder größer als die Standardabweichung der aufeinanderfolgenden Abweichungen ist oder größer als ein vordefinierter Betrag ist.

**7.** Verfahren nach einem der vorhergehenden Verfahrensansprüche, **dadurch gekennzeichnet, daß** ein Korrekturwert erst gebildet wird, wenn eine Mindestzahl von zeitlich aufeinanderfolgenden Abweichungen ermittelt ist.

**8.** Verfahren nach einem der vorhergehenden Verfahrensansprüche, **dadurch gekennzeichnet, daß** eine Differenz zwischen einer errechneten Position und einer hiermit korrespondierenden, wahrscheinlichen Position auf einer digitalisierten Straßenkarte jeweils nach einer oder mehreren Additionen von Vektoren ermittelt wird, wobei die Vektoren aus Meßwerten für eine zurückgelegte Entfernung und für eine Richtung gebildet werden, und daß die zu speichernde Abweichung gebildet wird, indem die ermittelte Differenz durch die Zahl der Vektoradditionen dividiert wird, die seit dem vorhergehenden Vergleich mit der digitalisierten Straßenkarte erfolgte.

**9.** Verfahren nach einem der vorhergehenden Verfahrensansprüche, **dadurch gekennzeichnet, daß** die Abweichungen entweder separat nach Betrag und Winkel oder separat nach x-Richtung und y-Richtung im kartesischen Koordinatensystem gespeichert werden.

**10.** Verfahren nach einem der vorhergehenden Verfahrensansprüche, **dadurch gekennzeichnet, daß** als korrespondierende, wahrscheinliche Position der digitalisierten Straßenkarte eine von mehreren möglichen Positionen ausgewählt wird, die noch nicht als sicher zutreffende Position erkannt worden ist.

**11.** Verfahren nach einem der vorhergehenden Ansprüche, **dadurch gekennzeichnet, dass** vom Prozessor (12) Vektoren aus den Messwerten für eine zurückgelegte Entfernung und für eine Richtung gebildet und zwecks Positionsbestimmung addiert werden.

**Claims**

1. Navigation device for dead reckoning which has:

   - at least one input (13) for a sensor (13) to determine a distance,
   - at least one input (14) for a sensor (141) to determine a direction,
   - at least one processor (12) for position calculation on the basis of measurement values from the sensors (13, 14),
   - a digital road map stored in a memory (16), with which a calculated position is compared,

   **characterized in that**

   - a sequence of deviations in each case between a calculated position and a corresponding position on the digitized road map can be stored in a memory (11),
   - the calculated position can be corrected with a correction value formed on the basis of stored deviations, and
   - a sequence of deviations can be stored to form a correction value in the memory (11) until a new deviation which is to be stored lies outside a defined limit.

2. Navigation device according to Claim 1, **characterized in that** a new sequence of deviations can be stored to form a correction value if the difference between the deviations in the sequence is no greater than the standard deviation of the current sequence or a predefined amount.

3. Navigation device according to one of the preceding claims, **characterized in that** the deviation which can be stored is the value which is formed from the formation of the difference between the calculated position and the corresponding position on the digital road map, divided by the number of distances and/or directions added together since the preceding difference formation.

4. Method for position determination by means of dead reckoning in a navigation device with at least one input (13) for a sensor (131) to determine a distance, at least one input (14) for a sensor (141) to determine a direction, at least one processor (12) and a memory (16), in which a digitized road map is stored, whereby positions are calculated by the processor (12) on the basis of measurement values from the sensors (13, 14), **characterized by** the following steps:

   - a difference between a calculated position and a corresponding probable position on a digitized road map is formed and stored as a deviation from the probable position,
   - a correction value is determined on the basis of consecutive deviations, whereby a sequence of deviations is stored to form a correction value until a new deviation which is to be stored lies outside a defined limit,
   - the correction value is added in each case to a subsequently calculated position.

5. Method according to the preceding claim, **characterized in that** the correction value is formed on the basis of the average of the deviations.

6. Method according to the preceding claim, **characterized in that** consecutive deviations are used to form a correction value until the difference between a position calculated with the correction value and the corresponding probable position on the digitized road map is greater than the previously defined deviation or greater than the standard deviation of the consecutive deviations, or is greater than a predefined amount.

7. Method according to one of the preceding method claims, **characterized in that** a correction value is not formed until a minimum number of consecutive deviations is determined.

8. Method according to one of the preceding method claims, **characterized in that** a difference between a calculated position and a corresponding probable position on a digitized road map is determined in each case following one or more additions of vectors, whereby the vectors are formed from measurement values for a distance travelled and for a direction, and that the deviation which is to be stored is formed by dividing the determined difference by the number of vector additions carried out since the preceding comparison with the digitized road map.

9. Method according to one of the preceding method claims, **characterized in that** the deviations are stored either separately according to amount and angle, or separately according to x direction and y direction in the Cartesian coordinate system.

10. Method according to one of the preceding method claims, **characterized in that** one of a plurality of possible positions, which has not yet been certainly identified as the correct position, is selected as the corresponding probable position on the digitized road map.

11. Method according to one of the preceding claims, **characterized in that** vectors are formed by the processor (12) from the measurement values for a distance travelled and for a direction, and are added together for position determining purposes.

## Revendications

1. Appareil de navigation pour une navigation couplée, comportant:

   - au moins une entrée (13) pour un capteur (131) destiné à déterminer une distance,
   - au moins une entrée (14) pour un capteur (141) destiné à déterminer une direction,
   - au moins un processeur (12) destiné à calculer une position sur la base de valeurs de mesure provenant des capteurs (13, 14),
   - une carte routière numérisée mémorisée dans une mémoire (16), avec laquelle une position calculée est comparée,

   **caractérisé par le fait que**

   - dans une mémoire (11 ), il est possible de mémoriser cas par cas une suite de déviations entre une position calculée et une position correspondante sur la carte routière numérisée,
   - il est possible de corriger la position calculée à l'aide d'une valeur de correction formée sur la base de déviations mémorisées et
   - il est possible de mémoriser, dans la mémoire (11), une suite de déviations destinées à la formation d'une valeur de correction jusqu'à ce qu'une nouvelle déviation à mémoriser se trouve au-delà d'une limite définie.

2. Appareil de navigation selon la revendication 1 **caractérisé par le fait qu'**il est possible de mémoriser une nouvelle suite de déviations destinée à former une valeur de correction lorsque la suite des déviations se compose de déviations qui n'ont pas entre elles une différence supérieure à la déviation normalisée de la suite actuelle ou à une valeur donnée.

3. Appareil de navigation selon l'une des revendications précédentes **caractérisé par le fait que** la déviation qui peut être mémorisée est la valeur qui est formée à partir de la différence entre la position calculée et la position correspondante sur la carte routière numérisée et divisée par le nombre des distances et/ou des directions additionnées depuis la formation de la différence précédente.

4. Procédé permettant de déterminer la position au moyen d'une navigation couplée dans un appareil de navigation ayant au moins une entrée (13) pour un capteur ( 131 ) destiné à déterminer une d istance, au m oins une entrée (14) pour un capteur (141) destiné à déterminer une direction, au moins un processeur (12) et une mémoire (16), dans laquelle est stockée une carte routière numérisée, le processeur (12) calculant des positions sur la base de valeurs de mesure provenant des capteurs (13, 14), **caractérisé par** les étapes:

   - on forme une différence entre une position calculée et une position probable, qui lui correspond, sur une carte routière numérisée et on la mémorise en tant que déviation de la position probable,

   - sur la base de déviations qui se succèdent dans le temps, on détermine une valeur de correction, une suite de déviations étant mémorisée pour la formation d'une valeur de correction jusqu'à ce qu'une nouvelle déviation à mémoriser se trouve au-delà d'une limite définie,

   - la valeur de correction est additionnée dans chaque cas à une position calculée immédiatement après.

5. Procédé selon la revendication précédente **caractérisé par le fait que** la valeur de correction est formée sur la base de la moyenne des déviations.

6. Procédé selon la revendication précédente **caractérisé par le fait que** des déviations qui se succèdent dans le temps sont utilisées pour former une valeur de correction jusqu'à ce que la différence entre une position calculée avec la valeur de correction et la position probable qui lui correspond sur la carte routière numérisée devient supérieure à la déviation déterminée auparavant ou supérieure à la déviation normalisée des déviations qui se succèdent ou supérieure à une valeur donnée.

7. Procédé selon l'une des revendications précédentes **caractérisé par le fait qu'**une valeur de correction n'est formée que lorsqu'un nombre minimum de déviations qui se succèdent dans le temps a été constaté.

8. Procédé selon l'une des revendications précédentes **caractérisé par le fait qu'**une différence entre une position calculée et une position probable, qui lui correspond, sur une carte routière numérisée est déterminée dans chaque cas après une ou plusieurs additions de vecteurs, les vecteurs étant formés à partir de valeurs de mesure pour une distance parcourue et pour une direction, et que la déviation à mémoriser est formée en divisant la différence obtenue par le nombre des additions de vecteur qui ont eu lieu depuis la comparaison précédente avec la carte routière numérisée.

9. Procédé selon l'une des revendications précédentes **caractérisé par le fait que** les déviations sont mémorisées ou bien séparément selon la valeur et l'angle ou bien séparément selon la direction x et la direction y dans le système de coordonnées cartésiennes.

10. Procédé selon l'une des revendications précédentes **caractérisé par le fait qu'**on choisit, comme position probable correspondante sur la carte routière numérisée, l'une de plusieurs positions possibles qui n'ont pas encore été reconnues comme position sûrement pertinente.

11. Procédé selon l'une des revendications précédentes **caractérisé par le fait que** le processeur (12) forme des vecteurs à partir des valeurs de mesure pour une distance parcourue et pour une direction et les additionne en vue d'une détermination de la position.

## FIG 1

131

141

13

14

RAM

MP

1

11

15

12

16

161

FIG 2